# EUROPEAN PATENT APPLICATION

(11) **EP 4 597 262 A1**
(43) Date of publication of application: **06.08.2025**
(21) Application number: 23870742.6
(22) Date of filing: 25.09.2023
(51) Int. Cl.: G06F 3/01

(54) **INFORMATION DISPLAY METHOD AND APPARATUS, AND DEVICE AND STORAGE MEDIUM**

(30) Priority: 28.09.2022 CN 202211218484
(71) Applicant: Vivo Mobile Communication Co., Ltd., Dongguan, Guangdong 523863 (CN)
(72) Inventor: ZHANG, Jingrui, Dongguan, Guangdong 523863 (CN)
(74) Representative: Lavoix
(86) International application number: PCT/CN2023/121198
(87) International publication number: WO 2024/067513

(57) **Abstract**

This application discloses an information display method and apparatus, a device, and a storage medium, and pertains to the field of computer technologies. The method includes: establishing a connection with a terminal device; in a case that a terminal device acquires a notification message, issuing a position reminder based on first position information of the terminal device, where the position reminder is used to indicate a relative position of the terminal device with respect to the electronic device; and in a case of detecting that the terminal device is within a view angle range, switching a currently displayed first image to a second image that is captured by a camera and includes the terminal device.

## Description

### CROSS-REFERENCE TO RELATED APPLICATIONS

This application claims priority to Chinese Patent Application No. 202211218484.8, filed with the China National Intellectual Property Administration on September 28, 2022 and entitled "INFORMATION DISPLAY METHOD AND APPARATUS, DEVICE, AND STORAGE MEDIUM", which is incorporated herein by reference in its entirety.

### TECHNICAL FIELD

This application pertains to the field of computer technologies and specifically relates to an information display method and apparatus, a device, and a storage medium.

### BACKGROUND

With the development of computer technologies and image processing technologies, VR (Virtual Reality) devices isolate information from the external real environment to meet the immersive experience needs of users while the users are experiencing content.

However, when terminal devices such as mobile phones serve as important carriers for information transmission, important messages such as phone calls and video calls need to be sent to the user with the highest priority. If a user is using a VR device at that moment, it is easy for the user to miss important information, and the information cannot be sent to the user in a timely manner.

### SUMMARY

Embodiments of this application are intended to provide an information display method and apparatus, a device, and a storage medium, to solve the problems that a user is likely to miss important information while using a VR device and thus the information cannot be sent to the user in a timely manner, thereby realizing timely information transmission to the user and ensuring the user experience.

According to a first aspect, an embodiment of this application provides an information display method applied to an electronic device. The method includes:
establishing a connection with a terminal device;
in a case that the terminal device acquires a notification message, issuing a position reminder based on first position information of the terminal device, where the position reminder is used to indicate a relative position of the terminal device with respect to the electronic device; and
in a case of detecting that the terminal device is within a view angle range, switching a currently displayed first image to a second image that is captured by a camera and comprises the terminal device.

According to a second aspect, an embodiment of this application provides an information display apparatus applied to an electronic device, including: a device connection module, a message response module, and an image switching module; wherein
the device connection module is configured to establish a connection with a terminal device;
the message response module is configured to, in a case that the terminal device acquires a notification message, issue a position reminder based on first position information of the terminal device, where the position reminder is used to indicate a relative position of the terminal device with respect to the electronic device; and
the image switching module is configured to, in a case of detecting that the terminal device is within a view angle range, switch a currently displayed first image to a second image that is captured by a camera and comprises the terminal device.

According to a third aspect, an embodiment of this application provides an electronic device, where the electronic device includes a processor, a memory, and a program or instructions stored in the memory and capable of running on the processor, and when the program or the instructions are executed by the processor, the steps of the method according to the first aspect are implemented.

According to a fourth aspect, an embodiment of this application provides a readable storage medium, where a program or instructions are stored in the readable storage medium, and when the program or the instructions are executed by a processor, the steps of the method according to the first aspect are implemented.

According to a fifth aspect, an embodiment of this application provides a chip, where the chip includes a processor and a communication interface, the communication interface is coupled to the processor, and the processor is configured to execute a program or instructions to implement the method according to the first aspect.

In the embodiments of this application, when the notification message issued by the terminal device is received, the position reminder is issued based on the first position information of the terminal device; and when it is detected that the terminal device is within the current view angle range, the currently displayed first image is switched to the second image that is captured by the camera and includes the terminal device, such that the user can pick up the terminal device and reply to a message based on the position reminder and the position of the terminal device shown in the second image. This realizes timely information transmission to the user and ensures the user experience.

### BRIEF DESCRIPTION OF DRAWINGS

FIG. 1 is a flowchart of an information display method according to an embodiment of this application;
FIG. 2 is a schematic flowchart of issuing a position reminder according to an embodiment of this application;
FIG. 3 is a schematic flowchart of displaying a position of a terminal device in a second image according to an embodiment of this application;
FIG. 4 is a schematic diagram of a positional relationship between a first terminal device and a view angle range according to an embodiment of this application;
FIG. 5 is a schematic diagram of display of a position reminder according to an embodiment of this application;
FIG. 6 is a schematic diagram of a positional relationship between a second terminal device and a view angle range according to an embodiment of this application;
FIG. 7 is a schematic diagram of display of a second image according to an embodiment of this application;
FIG. 8 is a schematic diagram of a positional relationship between a third terminal device and a view angle range according to an embodiment of this application;
FIG. 9 is a schematic diagram of display switched from a second image to a first image according to an embodiment of this application;
FIG. 10 is a schematic structural diagram of an information display apparatus according to an embodiment of this application;
FIG. 11 is a schematic diagram of a framework structure of an electronic device according to an embodiment of this application; and
FIG. 12 is a schematic diagram of a hardware structure of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects instead of describing a specific order or sequence. It should be understood that data used in this way is used interchangeably in appropriate circumstances so that the embodiments of this application can be implemented in other orders than the order illustrated or described herein. In addition, "first", "second", and the like are usually used to distinguish objects of a same type, and do not restrict a quantity of the objects. For example, there may be one or a plurality of first objects. In addition, "and/or" in the specification and claims represents at least one of connected objects, and the character "/" generally indicates that the contextually associated objects have an "or" relationship.

The following describes in detail the information display method provided in the embodiments of this application by using specific embodiments and application scenarios thereof with reference to the accompanying drawings.

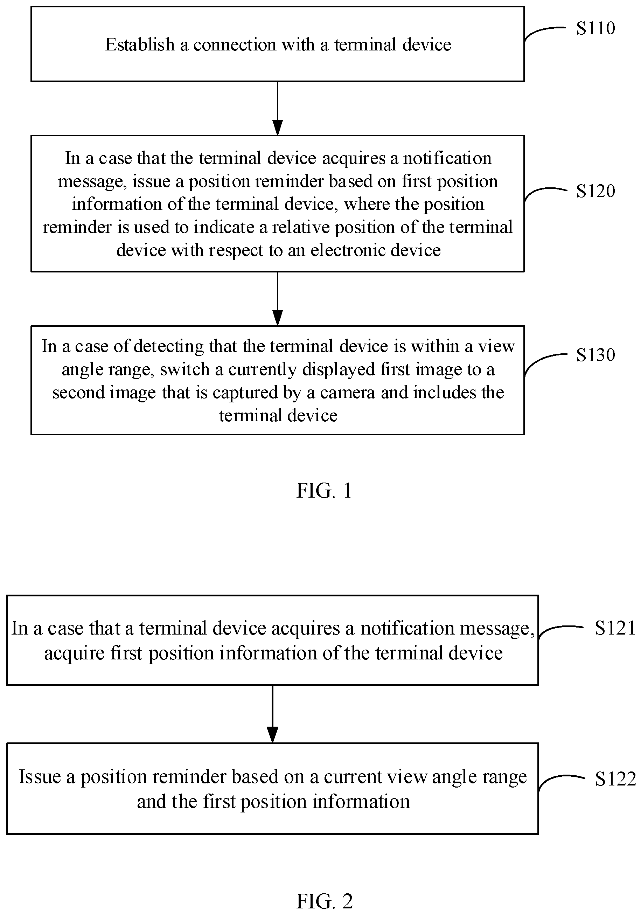

FIG. 1 is a flowchart of an information display method according to an embodiment of this application. The information display method provided in this embodiment of this application may be performed by an information display apparatus. The information display apparatus may be implemented in a manner of hardware and/or software and is integrated into an information display device. The information display method is applicable to an electronic device. The electronic device may be a VR wearable device such as VR glasses.

The following uses an example in which an information display apparatus performs an information display method for description. Referring to FIG. 1, the information display method includes the following steps.

S110. Establish a connection with a terminal device.

In this solution, the information display apparatus is connected to the terminal device in advance in a predetermined connection manner, and communicates with the terminal device. The information display apparatus may be connected to the terminal device in a connection manner such as Bluetooth, Wi-Fi hotspot, or Internet. The terminal device may be a mobile phone, a tablet computer, or the like. The information display device is provided with a built-in or externally connected display module. The information display apparatus displays image information (such as game images, audio and video images, and instant chat communication images) through the display module. After wearing the information display device, users can observe the image information displayed by the display module. In addition, the information display device may further be provided with a built-in or externally connected audio module. The information display apparatus plays audio information through the audio module. After wearing the information display device, users can hear the corresponding audio information through the audio module.

A VR device serving as an information display device is used as an example. In the related art, while a user is using a VR device, if a terminal device receives a message for reminding the user, it is likely that the user cannot handle the message in a timely manner because the user is using the VR device. In this case, the user is engaging in an immersive experience with the VR device. Typically, the VR device isolates the user from external perceptions. For example, a helmet-type VR device blocks out real images and sounds of the environment. Moreover, while displaying virtual images, the VR device also plays sounds corresponding to the virtual images, making it difficult for the user to notice messages received by the terminal device. This results in an inability to transmit information to the user in a timely manner and low information transmission efficiency, affecting user experience. Upon receiving a notification message for reminding the user, the terminal device provided in this solution can issue a position reminder used to indicate a relative position of the terminal device with respect to the electronic device to a user who is using the information display apparatus, reminding the user to handle the message in a timely manner. This realizes timely information transmission to the user, thereby improving the information transmission efficiency and user experience.

S120. In a case that the terminal device acquires a notification message, issue a position reminder based on first position information of the terminal device, where the position reminder is used to indicate a relative position of the terminal device with respect to the electronic device.

For example, when the terminal device provided in this solution acquires a notification message, the information display apparatus is notified that the terminal device has acquired the notification message. Upon receiving from the terminal device, the notification that the notification message has been acquired, the information display apparatus determines first position information of the terminal device and issues a position reminder based on the first position information. The position reminder is used to indicate the relative position of the terminal device with respect to the electronic device. A user can move or turn around based on the position reminder, such that a view angle range of the information display apparatus moves towards the first position of the terminal device.

Optionally, the position reminder may be exhibited in a form of voice or image. For example, a reminder audio corresponding to the position reminder is played by the information display apparatus, a reminder image corresponding to the position reminder is displayed on a current image (either a virtual image or a real image) by the information display apparatus, or a reminder image is displayed in a pop-up window. For the position reminder issued in the form of images, the reminder image may be a guidance for the first position of the terminal device. For example, an arrow icon is used to indicate the first position of the terminal device. When the first position of the terminal device is located on the right side of the user or the information display apparatus, a rightward arrow icon and a predetermined text prompt pop up on an image currently displayed by the information display apparatus to guide the user to turn right, such that the view angle range of the information display apparatus moves towards the first position of the terminal device.

In a possible embodiment, in the terminal device, priorities of different types of messages or messages from different contacts can be configured, or a white list can be configured for different types of messages or messages from different contacts. Upon receiving a notification message, the terminal device determines, based on a corresponding priority of the notification message or whether the notification message is in the white list, whether to issue a reminding message to the user through the information display apparatus. If the notification message corresponds to a high priority, or if a message type or contact of the notification message is in the white list, a message reminder is issued according to a predetermined message reminding method, and a notification that the notification message has been acquired is sent to the information display apparatus. Otherwise, the message reminder is directly issued according to the predetermined message reminding method, without sending the notification that the notification message has been acquired to the information display apparatus. For example, when the terminal device receives a call reminder, a voice and video invitation, or a top message reminder, in addition to issuing the message reminder according to the predetermined reminding method, the terminal device also sends a notification that the notification message has been acquired to the information display apparatus connected. However, upon receiving a message such as a text message reminder that does not require immediate handling, the terminal device can issue the message reminder according to the predetermined reminding method, without reminding the user who is using the information display apparatus, so as to prevent excessively frequent position reminding to the user from affecting the user experience.

S130. In a case of detecting that the terminal device is within a view angle range, switch a currently displayed first image to a second image that is captured by a camera and includes the terminal device.

The information display device provided in this embodiment is provided with a camera, and the camera is arranged forward. To be specific, the orientation of the camera is the same as or similar to that of the user after the user wears the information display device. A shooting range of the camera is a view angle range corresponding to the information display apparatus.

The information display apparatus can capture images through the camera and display a second image captured by the camera. In this case, the display module displays a real image captured by the camera, where the real image is the same as or similar to an actual image observed by the user without wearing the information display device. The user can interact with the real environment based on an image displayed on the display module without removing the information display device. The user does not need to frequently remove or wear the information display device, thereby improving the user experience of the information display device.

For example, after the information display apparatus issues a position reminder, the user can turn towards the first position of the terminal device indicated by the position reminder, such that the view angle range of the information display apparatus moves to a direction corresponding to the first position of the terminal device.

Further, real-time detection is performed to check whether the terminal device is within the view angle range. If the detection shows that the terminal device is within the view angle range, the camera is invoked to capture a second image and the second image captured by the camera is displayed, such that a first image currently displayed by the information display device is switched to the second image that is captured by the camera and includes the terminal device. For example, a virtual image currently displayed by a VR wearable device is switched to a real image that includes the terminal device. It can be understood that since the terminal device is within the view angle range of the information display apparatus at this moment, the second image displayed at this moment includes an image corresponding to the terminal device. To be specific, the user can determine the first position of the terminal device based on an image position of the terminal device shown in the second image and can pick up the terminal device for message reply. Moreover, during message reply, the second image captured by the camera is persistently displayed. In this case, the user can perform a corresponding operation according to an interaction interface of the terminal device shown in the second image. During this period, from receiving the position reminder to picking up the terminal device for message reply, the user does not need to remove the information display device. This ensures timely information transmission to the user, and also improves message reply efficiency of the user, effectively improving the user experience.

When a notification that the notification message has been acquired is received from the terminal device, the position reminder is issued based on the first position information of the terminal device; and when it is detected that the terminal device is within the current view angle range, the currently displayed first image is switched to the second image that is captured by the camera and includes the terminal device, such that the user can pick up the terminal device and reply to a message based on the position reminder and the position of the terminal device shown in the second image. This realizes timely information transmission to the user and ensures the user experience.

In a possible embodiment, the information display method provided in this solution further includes: in a case that the information display device is in a wearing state and connected to the terminal device, acquiring first position information and/or terminal characteristic information of the terminal device.

For example, detection is performed to check whether the information display device is in a wearing state and connected to the terminal device. If yes, the first position information and/or terminal characteristic information of the terminal device is acquired. The wearing state is used to indicate whether the information display device is worn. For example, the information display device is provided with a wear detection module for detecting a wearing state of the information display device. The wear detection module may be a biological characteristic detection sensor, a distance sensor, or the like. In addition, whether the user wears the information display device can be determined through user behavior analysis based on an image captured by an external camera, to determine the wearing state of the information display device. When in an idle state, the information display device is in an unworn state. When it is detected that the user wears the information display device, the information display device switches from the unworn state to the wearing state.

The first position information can be determined by locating the terminal device. For example, the first position information of the terminal device is determined using a Bluetooth positioning technology, a Wi-Fi positioning technology, a graphical positioning technology (for example, locating the terminal device in an image captured by an external camera based on the terminal characteristic information of the terminal device), or the like. Optionally, when the information display device is connected to the terminal device, the first position information and/or terminal characteristic information of the terminal device can be acquired first without waiting for the user to wear the information display device, thereby improving the efficiency of acquiring the first position information and terminal characteristic information. Optionally, in a case that the information display device is in a wearing state and connected to the terminal device, the first position information of the information display device can be persistently collected and updated. In this solution, when it is detected that the information display device is in the wearing state and connected to the terminal device, the first position information of the terminal device is acquired; and when the notification that the notification message has been acquired is subsequently received from the terminal device, the first position information of the terminal device can be quickly determined, and a corresponding position reminder is issued, improving the message reminding efficiency.

The terminal characteristic information of the terminal device may be an appearance image or an image characteristic of the terminal device. For example, the terminal characteristic information of the terminal device may be pre-collected and provided by the terminal device, or may be obtained by the information display device or other scanning devices through characteristic collection. Based on the terminal characteristic information of the terminal device, characteristic matching can be performed on the second image to determine a position of the terminal device in the second image. Providing the position of the terminal device in the second image to the user allows the user to locate the position of the terminal device more quickly, improving the message reminding and reply efficiency.

In a possible embodiment, as shown in the schematic flowchart of issuing a position reminder in FIG. 2, in this solution, the issuing a position reminder based on first position information of the terminal device in a case that the terminal device acquires a notification message includes the following steps.

S121. In a case that the terminal device acquires the notification message, acquire the first position information of the terminal device.

S122. Issue the position reminder based on a current view angle range and the first position information.

For example, when the notification that the notification message has been acquired is received from the terminal device, the first position information of the terminal device and the current view angle range of the information display device are determined, and a relative position of the terminal device with respect to the electronic device is determined based on the first position information, and a position reminder is issued based on the relative position. Optionally, the view angle range of the information display device can be determined based on a real-time orientation and a shooting angle range of the camera.

Optionally, the position reminder may be provided through a pop-up window, and content operation options and device orientation guidance can be provided in the pop-up window. The content operation options are used to provide operation options for a currently displayed image, such as pausing playback and minimizing page. During page minimization, a currently displayed page can be switched from a home page to a second image captured by the camera. The content operation options can also include a quick reply option for the notification message. Through a quick reply to the notification message, the terminal device can be notified to quickly reply to a message, and the position reminder can be canceled. The device orientation guidance is used to indicate the relative position of the terminal device with respect to the electronic device, and can be represented by arrows pointing to different directions. For example, when the terminal device is on the right side of the current view angle range, the device orientation guidance is an arrow pointing to the right side.

In this solution, the position reminder is issued based on a positional relationship between the first position information of the terminal device and the current view angle range of the electronic device, to accurately remind the user of the position of the terminal device, such that the user can locate the position of the terminal device more quickly, improving the message reminding and reply efficiency.

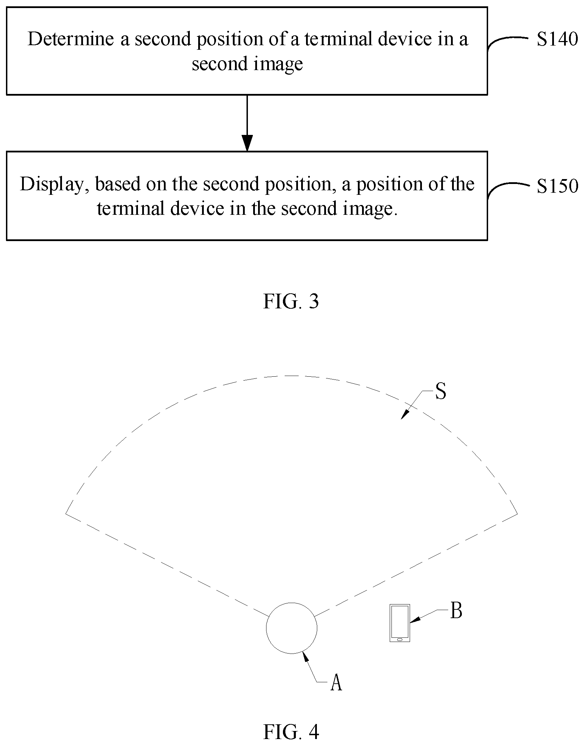

In a possible embodiment, after the second image captured by the camera is displayed, a reminder of the position of the terminal device can be displayed in the second image, allowing the user to conveniently locate the position of the terminal device in a timely manner, thereby improving the message reply efficiency. In view of this, as shown in the schematic flowchart of displaying a position of a terminal device in a second image in FIG. 3, after the switching a currently displayed first image to a second image that is captured by a camera and includes the terminal device, this solution further includes the following steps.

Step 140. Determine a second position of the terminal device in the second image.

S150. Display, based on the second position, a position of the terminal device in the second image.

For example, when the currently displayed first image is switched to the second image that is captured by the camera and includes the terminal device, the second position of the terminal device in the second image is determined, and the position of the terminal device is displayed in the second image based on the second position.

A method for displaying the position of the terminal device in the second image may be: adding an indicator box corresponding to an outline of the terminal device at a position corresponding to the second position in the second image, or highlighting the terminal device at the position corresponding to the second position in the second image, or adding a predetermined indicator icon at the position corresponding to the second position in the second image. In this solution, a prompt for the position of the terminal device in the second image is provided based on the second position, to guide the user to locate the position the terminal device more quickly, thereby improving the message reminding and reply efficiency.

In a possible embodiment, the terminal characteristic information of the terminal device is an image characteristic of the terminal device (for example, a characteristic descriptor). In view of this, in this solution, the determining the second position of the terminal device in the second image specifically includes: acquiring, based on the terminal characteristic information of the terminal device, a target object matching the terminal characteristic information from the second image, and determining a target position of the target object as the second position of the terminal device.

For example, when the currently displayed first image is switched to the second image that is captured by the camera and includes the terminal device, characteristic matching is performed on the second image based on the terminal characteristic information of the terminal device, to acquire the target object matching the terminal characteristic information from the second image based on a characteristic matching result, determine the target position of the acquired target object, and determine the target position as the second position of the terminal device. It can be understood that when the second position of the terminal device is determined in the second image, it can be determined that the terminal device is within the view angle range of the electronic device, and an image currently displayed by the electronic device is the second image that includes the terminal device. In this solution, the target position of the target object is determined in the second image based on the terminal characteristic information of the terminal device, and the target position is determined as the second position of the terminal device. The second position of the terminal device in the second image is accurately determined, improving the correctness of indicating the terminal device in the second image.

In a possible embodiment, in a case that the terminal characteristic information of the terminal device is an appearance image of the terminal device, when the second position of the terminal device is determined in the second image, image matching may be performed on the second image based on the terminal characteristic information of the terminal device, and the second position of the terminal device is determined based on an image matching result.

For example, image matching is performed on the second image based on the appearance image of the terminal device; and when a similarity between an identified target indicated by the image matching result and the appearance image meets a predetermined requirement, the second position of the terminal device is determined based on a position of the identified target in the second image. In this solution, image matching is performed on the second image based on the terminal characteristic information of the terminal device, such that the second position of the terminal device in the second image is accurately determined, improving the correctness of indicating the terminal device in the second image.

In a possible embodiment, after the switching a currently displayed first image to a second image that is captured by a camera and includes the terminal device, the information display method provided in this solution further includes: displaying a fourth image of the terminal device in a predetermined region of the second image.

For example, after the second image captured by the camera is displayed, the fourth image of the terminal device is simultaneously displayed in the predetermined region of the second image, allowing the user to observe content displayed on the terminal device in real time through the fourth image. The fourth image provided in this solution may be obtained by recording a screen image of the terminal device. Upon receiving data stream corresponding to the screen image that is sent by the terminal device, an information reminding apparatus displays the screen image as the fourth image in the predetermined region of the second image. The fourth image may alternatively be obtained by identifying a display region corresponding to the screen image of the terminal device in the second image and enlarging the display region, and the fourth image is displayed in the predetermined region of the second image. The predetermined region of the second image may be a predetermined region at one side of the second image (for example, a rectangular region on the right side of the second image). With the fourth image of the terminal device being synchronously displayed in the predetermined region of the second image, the user can observe a clearer screen image through the fourth image, realizing more convenient operation on the terminal device and more efficient notification message handling.

In a possible embodiment, after the user has handled the message received by the terminal device, a displayed image of the information display device can be restored. In view of this, after the switching a currently displayed first image to a second image that is captured by a camera and includes the terminal device, this solution further includes: displaying, in a case of determining that the notification message has been handled, the first image or a corresponding paused image of the first image.

For example, the second image captured by the camera is persistently displayed, and whether the notification message has been handled is determined. Moreover, after the notification message has been handled, the currently displayed second image is switched to the first image or the corresponding paused image of the first image. In this solution, after the notification message has been handled, the second image is switched to the first image or the corresponding paused image of the first image, allowing the user to continue the operation before message reply on the terminal device without manually switching the displayed image, thus facilitating the operation of the user. For example, a type of the first image is determined based on a type of the image displayed when the notification message is received. For example, if the image displayed when the notification message is received is a game image, after the notification message has been handled, the currently displayed second image can be directly switched to the game image; and if the image displayed when the notification message is received is an audio and video image, the corresponding audio and video image can be paused while the second image captured by the camera is displayed, and after the notification message has been handled, the currently displayed second image is switched to the corresponding paused image of the audio and video image, allowing the user to choose whether to continue playing the audio and video image.

In a possible embodiment, whether the notification message has been handled can be determined based on the operation of the user on the terminal device. In view of this, in the case where it is determined that the notification message has been handled, before displaying the first image or the corresponding paused image of the first image, this solution further includes: upon detecting a first operation on the terminal device, determining that the notification message has been handled, where the first operation includes a placement operation and a shutdown operation on the terminal device and/or a reply operation to the notification message.

For example, when it is detected that the user has triggered the first operation on the terminal device, it is determined that the notification message has been handled, and the currently displayed image is switched from the second image to the first image or the corresponding paused image of the first image. Optionally, the first operation includes a placement operation and a shutdown operation on the terminal device and/or a reply operation on the notification message. For example, when it is detected that the user has performed a placement operation on the terminal device (for example, it is detected that the terminal device is taken away from the user and placed on another object), it is detected that the user has performed a shutdown operation on the terminal device (for example, it is detected that the user has actively shut down the terminal device, where shutting down the terminal device may mean turning off a screen of the terminal device to make the screen of the terminal device skip into a screen-off state), or it is detected that the user has completed a reply operation to the notification message, it can be considered that the user no longer needs to operate the terminal device, and the notification message has been handled at that moment. That it is detected that the user has completed a reply operation to the notification message may mean it is detected that the user has sent a reply message to the notification message received by the terminal device and has closed a reply page of the message notification. For example, when a notification message is received by WeChat installed on the terminal device, the electronic device issues a position reminder; and when it is detected that the user has replied to the notification message on a reply page of the notification message and closed the reply page in WeChat, it is determined that the user has completed the reply operation to the notification message. For example, the terminal device can determine whether it is held by the user or placed down by using a built-in inertial motion sensor. When it is detected that the terminal device is placed down, the information display device is notified that a placement operation on the terminal device is detected. Alternatively, whether the terminal device is held by the user or placed down is determined based on an image captured by an external camera, and when it is detected that the terminal device is placed down, the information display device is notified that a placement operation on the terminal device is detected, and the information display device determines that the user has triggered a first operation on the terminal device. Alternatively, when a placement operation of the user on the terminal device is detected, detecting whether the terminal device is shut down (for example, whether the screen is turned off) or whether the terminal device has replied to the received message is continued. Moreover, when it is detected that the terminal device is shut down or has replied to the message, the information display device determines that the user has triggered a first operation on the terminal device. In this solution, whether the notification message has been handled is determined by detecting the first operation of the user on the terminal device, so as to accurately determine an occasion for switching to and displaying the first image or the corresponding paused image of the first image, without manually switching the displayed image by the user, thus facilitating the operation of the user.

In a possible embodiment, the information display method provided in this solution further includes: displaying a message received by the terminal device on the currently displayed first image. For example, when a notification that the notification message has been acquired is received from the terminal device, in addition to switching the first image to the second image, it is also possible to display the information received by the terminal device on top of the first image. To be specific, upon receiving new information, the terminal device sends a notification that the notification message has been acquired to the information display device. Upon receiving from the terminal device the notification that the notification message has been acquired, the information display device acquires the information received by the terminal device and displays the information received by the terminal device in a form of a pop-up message on top of the currently displayed first image, so that the user can check or handle the message received by the terminal device on the first image and can send a reply operation to the terminal device to notify the terminal device to reply to the message based on the reply operation.

For example, when a mobile phone receives a new message, the message received by the terminal device is displayed on a virtual image displayed on a VR wearable device, so that the user can check and reply to the message on the virtual image, and the reply operation to the message can be sent to the mobile phone, thus notifying the mobile phone to reply to the message based on the reply operation. In this solution, when a notification that the notification message has been acquired is received from the terminal device, the message received by the terminal device is displayed on top of the first image, so that the user can check the message in the first image and quickly handle the notification message through the information display device, and the user picks up the terminal device to handle the message without moving the view angle of the terminal device, thus effectively improving the information handling efficiency.

An example in which a VR device is used as an information display device and a mobile phone is used as a terminal device is used for illustrative description. After the information display device is connected to the terminal device, the first position information and terminal characteristic information of the terminal device are acquired and recorded, and the first position information of the terminal device and the current view angle range of the information display device are updated in real time. FIG. 4 is a schematic diagram of a positional relationship between a first terminal device and a view angle range according to an embodiment of this application. As shown in FIG. 4, an information display device A is provided with a camera. A shooting angle range of the camera is a view angle range S of the information display device A, and a region corresponding to the view angle range S of the information display device A in the figure is a fan-shaped region. Assuming that a first position of a terminal device B connected to the information display device A is outside the view angle range S at this moment, the first position of the terminal device B in the figure is located on the right side outside the view angle range S. If the terminal device B receives a high-priority message in a white list at this moment and it is necessary to remind a user to handle a notification message received by the terminal device in a timely manner, a notification that the notification message has been acquired is sent to the information display device A.

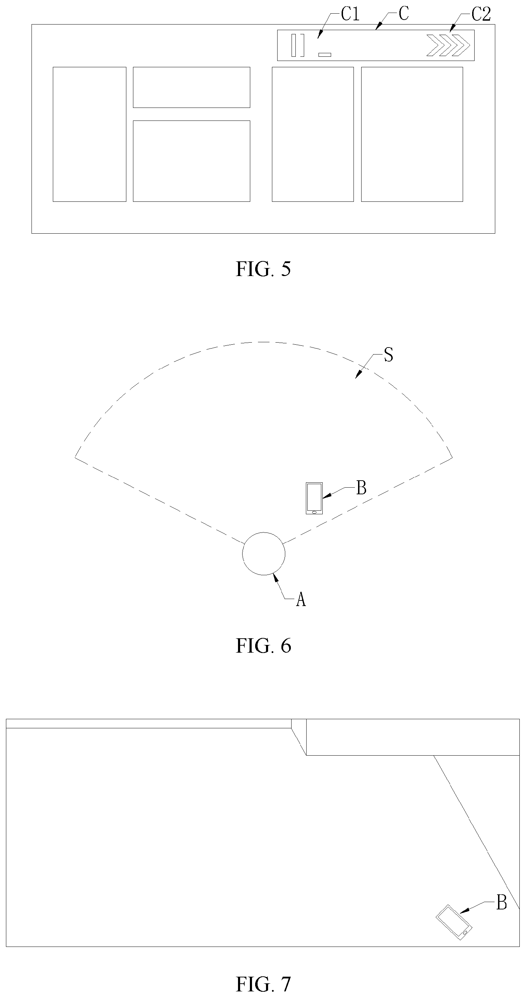

FIG. 5 is a schematic diagram of display of a position reminder according to an embodiment of this application. As shown in FIG. 5, upon receiving a notification that the notification message has been acquired, an information display device A acquires first position information of a terminal device B and a current view angle range S of the information display device A, and determines a relative position of the first position information of the terminal device B with respect to the view angle range S. If the first position information of the terminal device B is within the current view angle range S, a second image that is captured by a camera and includes the terminal device B can be directly displayed. Since a first position of the terminal device B is outside the current view angle range S at this moment, the information display device A needs to generate a position reminder based on a position of the first position indicated by the first position information of the terminal device B with respect to the current view angle range S, and display the position reminder in a form of a message pop-up window C in an image currently displayed by the information display device A. The message pop-up window C includes content operation options C1 and device orientation guidance C2. The content operation options C1 are used to provide operation options for the currently displayed image, such as pausing playback and minimizing page. The device orientation guidance C2 is used to indicate a relative position of the terminal device B with respect to the electronic device (VR device) within the current view angle range S, and is represented by arrows pointing to different directions. Since the terminal device B in the figure is on the right side of the current view angle range S, the device orientation guidance C2 in the figure is an arrow pointing to the right side.

FIG. 6 is a schematic diagram of a positional relationship between a second terminal device and a view angle range according to an embodiment of this application. While a position reminder is displayed, a user can turn right according to indication of the device orientation guidance C2, to make a first position of a terminal device A enter a view angle range S. As shown in FIG. 6, at this moment, as the user turns right, the view angle range S also rotates clockwise (from a top view) with the information display device A as the center; and as the view angle range S rotates, a terminal device B gradually enters the view angle range S.

FIG. 7 is a schematic diagram of display of a second image according to an embodiment of this application. Since a terminal device B enters a view angle range S at this moment, an information display device A switches a currently displayed image to a second image captured by a camera. It can be seen that a picture of the terminal device B is located in the second image. In addition, the information display device A performs characteristic matching in the second image based on terminal characteristic information of the terminal device B, determines a second position of the terminal device B in the second image based on a characteristic matching result, and indicates the second position in the second image. In the figure, the second position of the terminal device B in the second image is indicated in a form of an indicator box D. Thus, the user can accurately locate an actual position of the terminal device B in a real environment and can pick up the terminal device B to reply to a message. During this period, the user can accurately locate and pick up the terminal device A and reply to the message without removing the information display device A.

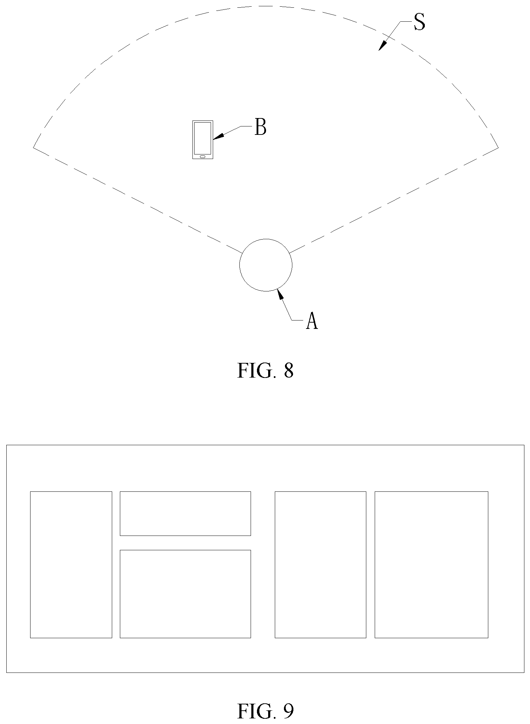

FIG. 8 is a schematic diagram of a positional relationship between a third terminal device and a view angle range according to an embodiment of this application. Assuming that after the user replies to the message, a terminal device B is placed on a desk, a first position of the terminal device B is still within a current view angle range S.

FIG. 9 is a schematic diagram of display switched from a second image to a first image according to an embodiment of this application. At this moment, after a first operation (replying to a message and placing down the terminal device B, where whether the user places down the terminal device B can be identified according to an image captured by an external camera arranged on site) of a user on a terminal device B is detected, a currently displayed second image is switched to the first image. At this moment, the user can continue to watch an image before receiving a position reminder and continue the previous VR content experience, and the user can pick up a mobile phone and reply to a message without removing a VR headset device.

According to the information display method provided in the embodiments of this application, when a notification that the notification message has been acquired is received from the terminal device, the position reminder is issued based on the first position information of the terminal device; and when it is detected that the terminal device is within the current view angle range, the currently displayed first image is switched to the second image that is captured by the camera and includes the terminal device, such that the user can pick up the terminal device and reply to a message based on the position reminder and the position of the terminal device shown in the second image. This realizes timely information transmission to the user and ensures the user experience. In addition, the target position of the target object is determined in the second image based on the terminal characteristic information of the terminal device, and the target position is determined as the second position of the terminal device. The second position of the terminal device in the second image is accurately determined, improving the correctness of indicating the terminal device in the second image. Moreover, after the notification message has been handled, the second image is switched to the first image or the corresponding paused image of the first image, allowing the user to continue the operation before message reply on the terminal device without manually switching the displayed image, thus facilitating the operation of the user.

It should be noted that for the information display method provided in the embodiments of this application, an execution body may be an information display apparatus, or a control module for performing an information reminding method in the information display apparatus. In the embodiments of this application, the information display apparatus provided in the embodiments of this application is described by using an example in which the information display apparatus performs an information reminding method.

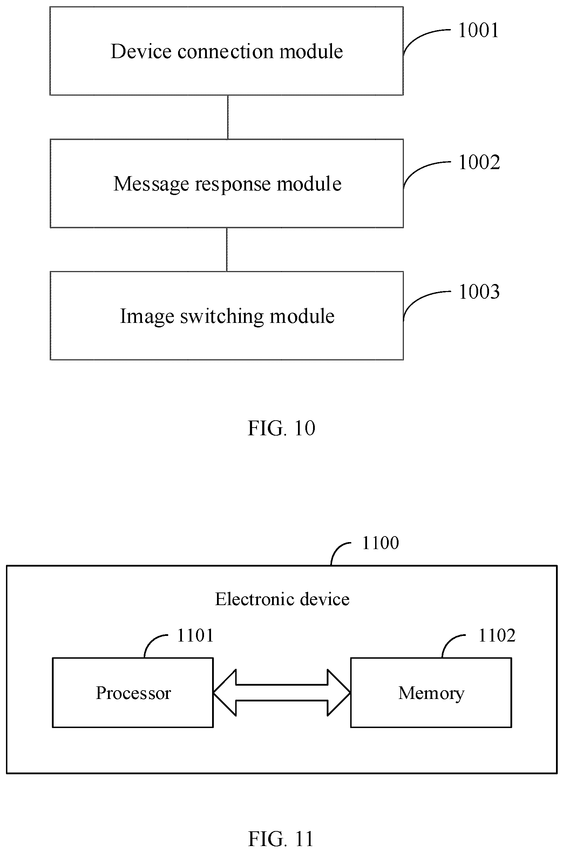

FIG. 10 is a schematic structural diagram of an information display apparatus according to an embodiment of this application. The information display apparatus is applicable to an electronic device. As shown in FIG. 10, the information display apparatus includes a device connection module 1001, a message response module 1002, and an image switching module 1003.

The device connection module 1001 is configured to establish a connection with a terminal device. The message response module 1002 is configured to, in a case that the terminal device acquires a notification message, issue a position reminder based on first position information of the terminal device, where the position reminder is used to indicate a relative position of the terminal device with respect to the electronic device. The image switching module 1003 is configured to, in a case of detecting that the terminal device is within a view angle range, switch a currently displayed first image to a second image that is captured by a camera and includes the terminal device.

Optionally, the information display apparatus further includes a second position determining module and a second position display module; where
the second position determining module is configured to acquire, based on terminal characteristic information of the terminal device, a target object matching the terminal characteristic information from the second image, and determine a target position of the target object as a second position of the terminal device; and
the second position display module is configured to display, based on the second position, a position of the terminal device in the second image.

Optionally, the information display apparatus further includes an image recovery module, where
the image recovery module is configured to, in a case of determining that the notification message has been handled, display the first image or a corresponding paused image of the first image.

Optionally, the information display apparatus further includes a recovery detection module, where
the recovery detection module is configured to, in a case that a first operation on the terminal device is detected, determine that the notification message has been handled, where the first operation includes a placement operation and a shutdown operation on the terminal device and/or a reply operation to the notification message.

Upon receiving from the terminal device a notification that the notification message has been acquired, the information display apparatus provided in the embodiments of this application issues the position reminder based on the first position information of the terminal device, and switches the currently displayed first image to the second image that is captured by the camera and includes the terminal device when it is detected that the terminal device is within the current view angle range, such that the user can pick up the terminal device and reply to a message based on the position reminder and the position of the terminal device shown in the second image. This realizes timely information transmission to the user and ensures the user experience. In addition, the target position of the target object is determined in the second image based on the terminal characteristic information of the terminal device, and the target position is determined as the second position of the terminal device. The second position of the terminal device in the second image is accurately determined, improving the correctness of indicating the terminal device in the second image. Moreover, after the notification message has been handled, the second image is switched to the first image or the corresponding paused image of the first image, allowing the user to continue the operation before message reply on the terminal device without manually switching the displayed image, thus facilitating the operation of the user.

The information display apparatus in this embodiment of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a server, a network-attached storage (Network Attached Storage, NAS), a personal computer (personal computer, PC), a television (television, TV), a teller machine, a self-service machine, or the like. This is not specifically limited in this embodiment of this application.

The information display apparatus in this embodiment of this application may be an apparatus having an operating system. The operating system may be an Android (Android) operating system, an iOS operating system, or another possible operating system, and is not specifically limited in this embodiment of this application.

The information display apparatus provided in this embodiment of this application can implement the processes implemented in the method embodiments in FIG. 1 or FIG. 9. To avoid repetition, details are not described herein again.

Optionally, as shown in FIG. 11, an embodiment of this application further provides an electronic device 1100 including a processor 1101, a memory 1102, and a program or instructions stored in the memory 1102 and capable of running on the processor 1101. When the program or instructions are executed by the processor 1101, the processes in the foregoing information display method embodiments are implemented, with the same technical effects achieved. To avoid repetition, details are not described herein again.

It should be noted that the electronic device in this embodiment of this application includes the foregoing mobile electronic device and non-mobile electronic device.

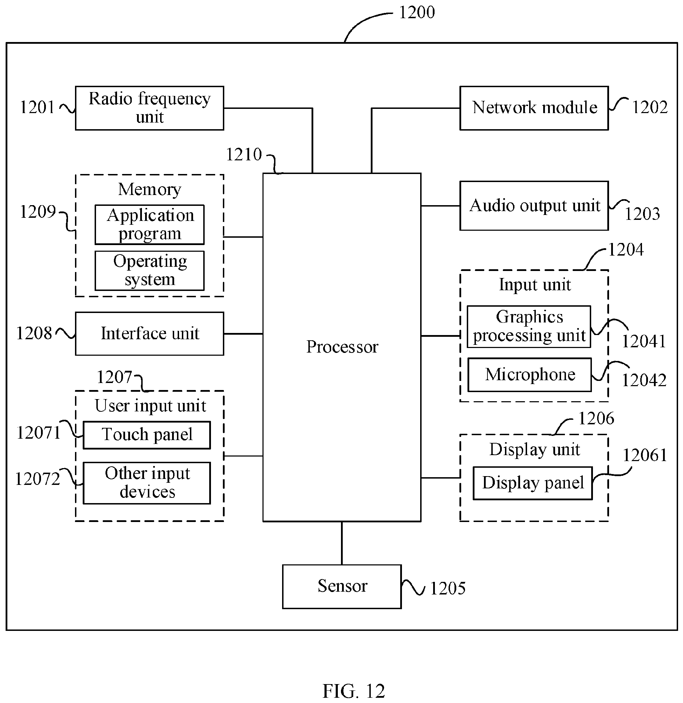

FIG. 12 is a schematic diagram of a hardware structure of an electronic device according to an embodiment of this application.

The electronic device 1200 includes but is not limited to components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

Persons skilled in the art can understand that the electronic device 1200 may further include a power supply (for example, a battery) that supplies power to various components. The power supply may be logically connected to the processor 1210 through a power management system, so that functions such as charge management, discharge management, and power consumption management are implemented by using the power management system. The structure of the electronic device shown in FIG. 12 does not constitute a limitation on the electronic device. The electronic device may include more or fewer components than those shown in the figure, or some components may be combined, or there may be a different component layout. Details are not described herein again.

The processor 1210 establishes a connection with a terminal device; issues, in a case that the terminal device acquires a notification message, a position reminder based on first position information of the terminal device, where the position reminder is used to indicate a relative position of the terminal device with respect to the electronic device; and switches, in a case of detecting that the terminal device is within a view angle range, a currently displayed first image to a second image that is captured by a camera and includes the terminal device.

When the notification message is received from the terminal device, the position reminder is issued based on the first position information of the terminal device; and when it is detected that the terminal device is within the current view angle range, the currently displayed first image is switched to the second image that is captured by the camera and includes the terminal device, such that the user can pick up the terminal device and reply to a message based on the position reminder and the position of the terminal device shown in the second image. This realizes timely information transmission to the user and ensures the user experience.

The processor 1210 is further configured to acquire, based on terminal characteristic information of the terminal device, a target object matching the terminal characteristic information from the second image after the switching the currently displayed first image to the second image that is captured by the camera and includes the terminal device, determine a target position of the target object as a second position of the terminal device, and display a position of the terminal device in the second image based on the second position.

The processor 1210 is further configured to, in a case of determining that the notification message has been handled, display the first image or a corresponding paused image of the first image after the switching the currently displayed first image to the second image that is captured by the camera and includes the terminal device.

The processor 1210 is further configured to, in a case of detecting a first operation on the terminal device, determine that the notification message has been handled, before the displaying the first image or the corresponding paused image of the first image in a case of determining that the notification message has been handled, where the first operation includes a placement operation and a shutdown operation on the terminal device and/or a reply operation to the notification message.

When the notification message is received from the terminal device, the position reminder is issued based on the first position information of the terminal device; and when it is detected that the terminal device is within the current view angle range, the currently displayed first image is switched to the second image that is captured by the camera and includes the terminal device, such that the user can pick up the terminal device and reply to a message based on the position reminder and the position of the terminal device shown in the second image. This realizes timely information transmission to the user and ensures the user experience. In addition, the target position of the target object is determined in the second image based on the terminal characteristic information of the terminal device, and the target position is determined as the second position of the terminal device. The second position of the terminal device in the second image is accurately determined, improving the correctness of indicating the terminal device in the second image. Moreover, after the notification message has been handled, the second image is switched to the first image or the corresponding paused image of the first image, allowing the user to continue the operation before message reply on the terminal device without manually switching the displayed image, thus facilitating the operation of the user.

It can be understood that in this embodiment of this application, the input unit 1204 may include a graphics processing unit (Graphics Processing Unit, GPU) 12041 and a microphone 12042. The graphics processing unit 12041 processes image data of a still picture or video obtained by an image capture apparatus (such as a camera) in a video capture mode or an image capture mode. The display unit 1206 may include a display panel 12061, and the display panel 12061 may be configured in a form of a liquid crystal display, an organic light-emitting diode, or the like. The user input unit 1207 includes a touch panel 12071 and other input devices 12072. The touch panel 12071 is also referred to as a touchscreen. The touch panel 12071 may include two parts: a touch detection apparatus and a touch controller. The other input devices 12072 may include but be not limited to a physical keyboard, a function button (such as a volume control button or an on/off button), a trackball, a mouse, and a joystick. Details are not described herein again. The memory 1209 may be configured to store software programs and various data which include but are not limited to an application program and an operating system. The processor 1210 may integrate an application processor and a modem processor. The application processor mainly processes an operating system, a user interface, an application program, and the like. The modem processor mainly processes wireless communication. It can be understood that the modem processor may alternatively be not integrated in the processor 1210.

An embodiment of this application further provides a readable storage medium, where the readable storage medium stores a program or instructions. When the program or the instructions are executed by a processor, the processes of the foregoing information display method embodiments are implemented, with the same technical effects achieved. To avoid repetition, details are not described herein again.

The processor is a processor in the electronic device described in the foregoing embodiments. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to execute a program or instructions to implement the foregoing information display method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

It can be understood that the embodiments described in the embodiments of this disclosure may be implemented by hardware, software, firmware, middleware, microcode, or a combination thereof. For hardware implementation, a module, a unit, or a subunit may be implemented in one or more application specific integrated circuits (Application Specific Integrated Circuit, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this disclosure, or a combination thereof.

For software implementation, the technologies described in the embodiments of this disclosure may be implemented by modules (such as processes and functions) that perform the functions described in the embodiments of this disclosure. Software code may be stored in the memory and executed by the processor. The memory may be implemented in or outside the processor.

In the embodiments provided in this application, it should be understood that the disclosed apparatus and method may be implemented in other manners. For example, the apparatus embodiment described above is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and various steps may alternatively be added, omitted, or combined. In addition, features described with reference to some examples may be combined in other examples.

Based on the above description of the embodiments, persons skilled in the art can clearly understand that the method in the foregoing embodiments can be implemented through software on a necessary hardware platform or certainly through hardware. Whether the functions of the method and unit examples in the embodiments are performed through hardware or software depends on particular applications and design constraints of the technical solutions. Persons skilled in the art may use different methods to implement the described functions for each particular application, but it should not be considered that the implementation goes beyond the scope of this disclosure. In most cases, implementing the methods in the foregoing embodiments through software on a necessary hardware platform is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An information display method applied to an electronic device, comprising:
establishing a connection with a terminal device;
in a case that the terminal device acquires a notification message, issuing a position reminder based on first position information of the terminal device, wherein the position reminder is used to indicate a relative position of the terminal device with respect to the electronic device; and
in a case of detecting that the terminal device is within a view angle range, switching a currently displayed first image to a second image that is captured by a camera and comprises the terminal device.

2. The information display method according to claim 1, after the switching a currently displayed first image to a second image that is captured by a camera and comprises the terminal device, further comprising:
acquiring, based on terminal characteristic information of the terminal device, a target object matching the terminal characteristic information from the second image, and determining a target position of the target object as a second position of the terminal device; and
displaying, based on the second position, a position of the terminal device in the second image.

3. The information display method according to claim 1, after the switching a currently displayed first image to a second image that is captured by a camera and comprises the terminal device, further comprising:
displaying, in a case of determining that the notification message has been handled, the first image or a corresponding paused image of the first image.

4. The information display method according to claim 3, before determining that the displaying the first image or a corresponding paused image of the first image has been completed, further comprising:
determining, in a case that a first operation on the terminal device is detected, that the notification message has been handled, wherein the first operation comprises a placement operation and a shutdown operation on the terminal device and/or a reply operation to the notification message.

5. An information display apparatus applied to an electronic device, comprising: a device connection module, a message response module, and an image switching module; wherein
the device connection module is configured to establish a connection with a terminal device;
the message response module is configured to, in a case that the terminal device acquires a notification message, issue a position reminder based on first position information of the terminal device, wherein the position reminder is used to indicate a relative position of the terminal device with respect to the electronic device; and
the image switching module is configured to, in a case of detecting that the terminal device is within a view angle range, switch a currently displayed first image to a second image that is captured by a camera and comprises the terminal device.

6. The information display apparatus according to claim 5, wherein the information display apparatus further comprises a second position determining module and a second position display module; wherein
the second position determining module is configured to acquire, based on terminal characteristic information of the terminal device, a target object matching the terminal characteristic information from the second image, and determine a target position of the target object as a second position of the terminal device; and
the second position display module is configured to display, based on the second position, a position of the terminal device in the second image.

7. The information display apparatus according to claim 5, wherein the information display apparatus further comprises an image recovery module, wherein
the image recovery module is configured to, in a case of determining that the notification message has been handled, display the first image or a corresponding paused image of the first image.

8. The information display apparatus according to claim 7, wherein the information display apparatus further comprises a recovery detection module, wherein
the recovery detection module is configured to, in a case that a first operation on the terminal device is detected, determine that the notification message has been handled, wherein the first operation comprises a placement operation and a shutdown operation on the terminal device and/or a reply operation to the notification message.

9. An electronic device, comprising a processor, a memory, and a program or instructions stored in the memory and capable of running on the processor, wherein when the program or instructions are executed by the processor, the steps of the information display method according to any one of claims 1 to 4 are implemented.

10. A readable storage medium, wherein the readable storage medium stores a program or instructions, and when the program or instructions are executed by a processor, the steps of the information display method according to any one of claims 1 to 4 are implemented.

11. A chip, wherein the chip comprises a processor and a communication interface, the communication interface is coupled to the processor, and the processor is configured to execute a program or instructions to implement the steps of the information display method according to any one of claims 1 to 4.

12. A computer program product, wherein the computer program product is executed by at least one processor to implement the steps of the information display method according to any one of claims 1 to 4.

13. An electronic device, configured to implement the steps of the information display method according to any one of claims 1 to 4.
